# EUROPEAN PATENT SPECIFICATION

(11) **EP 3 929 490 B1**
(45) Date of publication and mention of the grant of the patent: **09.11.2022**
(21) Application number: 20759418.5
(22) Date of filing: 03.02.2020
(51) Int. Cl.: F24C 7/02, H05B 6/68, H05B 6/70, H05B 6/64

(54) **HIGH FREQUENCY HEATING APPARATUS**
HOCHFREQUENZHEIZVORRICHTUNG
APPAREIL DE CHAUFFAGE À HAUTE FRÉQUENCE

(30) Priority: 22.02.2019 JP 2019029951
(43) Date of publication of application: 29.12.2021
(73) Proprietor: Panasonic Intellectual Property Management Co., Ltd., Osaka-shi, Osaka 540-6207 (JP)
(72) Inventor: NAKAMURA Hideki, Chuo-ku, Osaka-shi, Osaka 540-6207 (JP); YOSHINO Koji, Chuo-ku, Osaka-shi, Osaka 540-6207 (JP); SADAHIRA Masafumi, Chuo-ku, Osaka-shi, Osaka 540-6207 (JP); KUBO Masayuki, Chuo-ku, Osaka-shi, Osaka 540-6207 (JP)
(74) Representative: SSM Sandmair
(86) International application number: PCT/JP2020/003929
(87) International publication number: WO 2020/170784

(56) References cited:
- WO-A1-2015/141208
- JP-A- H0 395 317
- JP-A- H0 395 317
- JP-A- H01 105 738
- JP-A- H05 144 563
- JP-A- H05 144 563
- JP-A- 2011 138 721
- JP-A- 2014 048 012
- JP-B2- H0 465 095
- JP-U- S59 190 393

## Description

### TECHNICAL FIELD

The present disclosure relates to a high frequency heating apparatus having a thawing function.

### BACKGROUND ART

Regarding the high frequency heating apparatus of this type, PTL 1 discloses a configuration in which a detector detects a power level of a reflected wave received by an antenna and a controller controls various operations according to an output of the detector.

PTL 2 discloses a cooking apparatus that measures a temperature of a food easily and accurately in response, for example, to a change in the environmental temperature near an infrared sensor and performs an automatic cooking without causing variations in the cooked foods.

PTL 3 discloses a configuration that has a detector for detecting a power level of a reflected microwave power, integrates an output signal of the detector at rotation intervals of a turntable, and controls a magnetron based on a difference between a latest integrated value and an integrated value at a heating start time.

PTL 4 discloses a high frequency heating apparatus that has a weight sensor for detecting a weight of a food, a microwave sensor for detecting a power level of a reflected microwave power, and a controller for controlling a magnetron according to an output of the weight sensor and an output of the microwave sensor.

### Citation List

### Patent Literature

PTL 1: Unexamined Japanese Patent Publication No. H03-95317
PTL 2: Unexamined Japanese Patent Publication No. H07-91669
PTL 3: Unexamined Japanese Patent Publication No. H04-17293
PTL 4: Unexamined Japanese Patent Publication No. H04-65095

Another apparatus of the prior art is disclosed in JPH05144563.

### SUMMARY OF THE INVENTION

In the above-described conventional configurations, when a cooking menu or a thawing menu is selected by a user, cooking or thawing is automatically performed based on an output of one or more sensors such as the detector circuit disclosed in PTL 1 or the infrared sensor disclosed in PTL 2.

However, in the method disclosed in PTL 1, the controller does not receive the output signal of the detector circuit for a specified time period after the start of cooking. Accordingly, cooking or thawing of a heating target object cannot be performed appropriately depending on the volume of the object.

Even in such a high frequency thawing apparatus that has a function of allowing the user to enter the weight of the heating target object in addition to the selection of the cooking menu or the thawing menu, cooking or thawing cannot be performed appropriately when the weight of the object entered by the user is inaccurate.

PTL 1 and PTL 3 teach that a sign that the object to be thawed has been actually thawed appears in the object when the output signal of the detector circuit has a local minimum value on a graph representing a temporal change in the output signal of the detector circuit or when the gradient of the graph becomes close to zero. However, even in the middle of the thawing process, it sometimes occurs that the output signal of the detector circuit has a local minimum value or that the gradient of the graph becomes zero.

The present disclosure is to solve the above-described conventional problems. Therefore, an object of the present disclosure is to provide a high frequency heating apparatus that is capable of accurately thawing a heating target object.

A high frequency heating apparatus in one aspect of the present disclosure comprises a heating chamber to accommodate a heating target object, a radio wave generator, an antenna, a detector, and a controller.

The radio wave generator generates a high frequency radio wave to be supplied to the heating chamber. The antenna receives at least one of the high frequency radio wave to be supplied to the heating chamber and a high frequency radio wave returned from the heating chamber. The detector detects the high frequency radio wave received by the antenna. The controller controls the radio wave generator based on an output signal of the detector.

The controller also determines that the object has completely thawed based on the output signal of the detector and changes a length of time to be taken after a start of heating the object before beginning to determine that the object has completely thawed according to at least one of a weight of the object and a kind of the object.

According to the high frequency heating apparatus in this aspect, it is possible to thaw the object with high accuracy.

### BRIEF DESCRIPTION OF DRAWINGS

FIG. 1 is a schematic diagram of a high frequency heating apparatus according to a first exemplary embodiment of the present disclosure.
FIG. 2 is a schematic diagram of a detector in the first exemplary embodiment.
FIG. 3 is a graph showing temporal changes in the output signal of the detector and the temperature of the heating target object in a case of thawing 100 g of ground meat.
FIG. 4 is a schematic diagram of a high frequency heating apparatus according to a second exemplary embodiment of the present disclosure.
FIG. 5 is a schematic diagram of a high frequency heating apparatus according to a third exemplary embodiment of the present disclosure.

### DESCRIPTION OF EMBODIMENTS

A high frequency heating apparatus in a first aspect of the present disclosure comprises a heating chamber to accommodate a heating target object, a radio wave generator, an antenna, a detector, and a controller.

The radio wave generator generates a high frequency radio wave to be supplied to the heating chamber. The antenna receives at least one of the high frequency radio wave to be supplied to the heating chamber and a high frequency radio wave returned from the heating chamber. The detector detects the high frequency radio wave received by the antenna. The controller controls the radio wave generator based on an output signal of the detector.

The controller also determines that the object has completely thawed based on the output signal of the detector and changes a length of time to be taken after a start of heating the object before beginning to determine that the object has completely thawed according to at least one of a weight of the object and a kind of the object.

A high frequency heating apparatus in a second aspect of the present disclosure, based on the first aspect, further comprises an input unit that receives at least one of the weight of the object and the kind of the object.

A high frequency heating apparatus in a third aspect of the present disclosure, based on the first aspect, further comprises an input unit that receives the kind of the object, and an infrared sensor that is disposed inside the heating chamber and detects a temperature of the object placed in the heating chamber.

The controller also estimates the weight of the object by estimating a size of the object based on the temperature of the object and changes the length of time after the start of heating the object until the time to begin determining that the object has completely thawed according to at least one of the weight of the object and the kind of the object.

A high frequency heating apparatus in a fourth aspect of the present disclosure, based on the first aspect, further comprises an input unit that receives the kind of the object, and a weight sensor that detects a weight of the object. The controller also changes the length of time after the start of heating the object until the time to begin determining that the object has completely thawed according to at least one of the weight of the object and the kind of the object.

Hereinafter, exemplary embodiments of the present disclosure will be described with reference to the drawings.

### FIRST EXEMPLARY EMBODIMENT

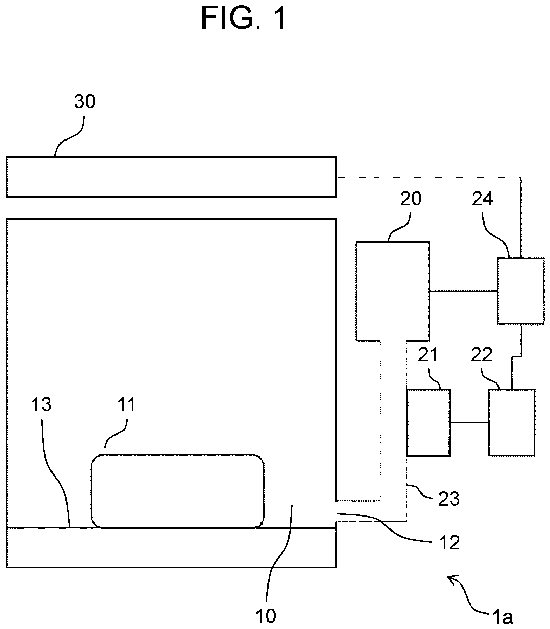

FIG. 1 is a schematic diagram of high frequency heating apparatus 1a according to a first exemplary embodiment of the present disclosure.

As shown in FIG. 1, heating target object 11 is placed on base plate 13, which is a bottom surface of heating chamber 10. Radio wave generator 20 includes a magnetron or the like and generates a high frequency radio wave under control of controller 24. The high frequency radio wave generated by radio wave generator 20 propagates in wave guide 23 and is supplied to heating chamber 10 through entrance port 12. In the present exemplary embodiment, entrance port 12 is disposed at the bottom of heating chamber 10. Entrance port 12 may be disposed at the top of heating chamber 10.

Apart of the high frequency radio wave supplied to heating chamber 10 is not absorbed by object 11 and returns as a reflected wave through entrance port 12 to wave guide 23. Antenna 21 functions as a directional coupler to separately extract the incident wave and the reflected wave that are propagating in wave guide 23. Detector 22 detects the incident wave and the reflected wave extracted by antenna 22.

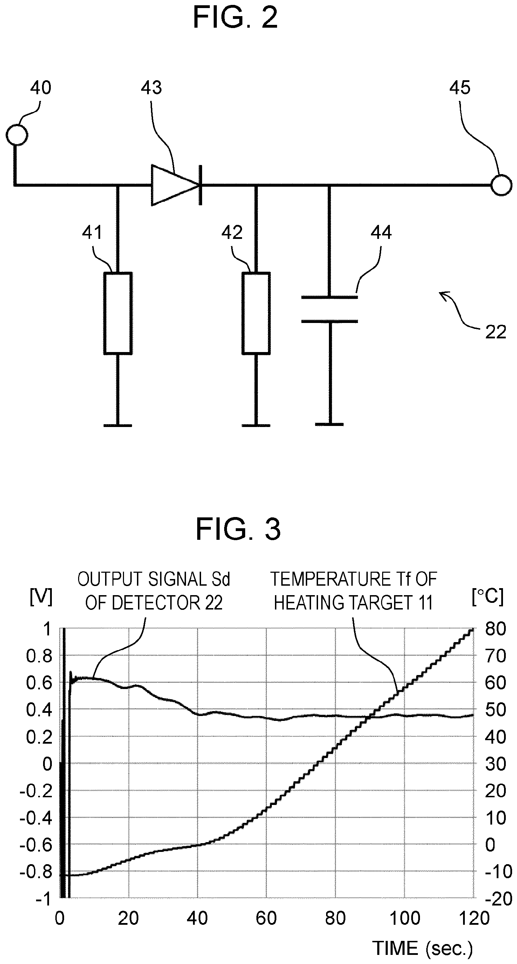

FIG. 2 is a schematic diagram of detector 22. Usually, an output signal of detector 22 is a voltage value. As shown in FIG. 2, detector 22 receives the incident wave and the reflected wave, which are extracted by antenna 22, through input terminal 40.

Detector 22 has, as components connected between input terminal 40 and output terminal 45, resistor 41, resistor 42, diode 43, and capacitor 44. Resistor 41, resistor 42 and capacitor 44 are connected in parallel between input terminal 40 and output terminal 45. Diode 43 is connected in series between input terminal 40 and output terminal 45.

Antenna 21 receives each of the incident wave and the reflected wave at the level attenuated by approximately 20 dB. Detector 22 converts a signal received by antenna 21 to a DC voltage. Controller receives this DC voltage as an output signal of detector 22 through output terminal 45.

In the present exemplary embodiment, detector 22 is used to obtain temperature information of object 11. As shown in FIG. 1, entrance port 12 is disposed at the side of base plate 13, or at the bottom of heating chamber 10.

Antenna 21 receives either one of the incident wave or the reflected wave or receives both of the incident wave and the reflected wave. Detector 22 detects the received high frequency radio wave. From this detection result, controller 24 can obtain approximate temperature information of object 11.

During the process of thawing frozen object 11, a state in which the power level of the reflected wave is larger to a certain extent than the power level of the incident wave means that object 11 has not adequately absorbed the radio wave, or, in other words, object 11 is still in the frozen state. On the other hand, a state in which the power level of the reflected wave is smaller to a certain extent than the power level of the incident wave means that object 11 has adequately absorbed the radio wave, or, in other words, thawing has been progressed to a certain extent.

High frequency heating apparatus 1a can approximately estimate the thawed status of object 11 and the temperature of object 11 by detecting the power level of the incident wave and the power level of the reflected wave.

Input unit 30 is provided for the user to enter the weight and the kind of object 11. An output signal of input unit 30 is inputted to controller 24. Regarding the weight of object 11, a numerical value such as 100 g or 1 kg is entered by using input unit 30. Regarding the kind of object 11, the kind of object 11 such as ground meat or vegetable is entered by using input unit 30.

FIG. 3 shows temporal changes in output signal Sd of detector 22 and temperature Tf of object 11 in a case of thawing 100 g of ground meat. In the present exemplary embodiment, plural (e.g., eight) needle-like temperature sensors are inserted inside the ground meat. Temperature Tf shown in FIG. 3 is the temperature detected by a temperature sensor that detected 0 °C earliest among the plural temperature sensors.

Referring to FIG. 3, output signal Sd of detector 22 represents the power level of the reflected wave. Output signal Sd of detector 22 may represent the ratio of the power level of the reflected wave to the power level of the incident wave.

As shown inn FIG. 3, output signal Sd varies largely due to the influence of noises or the like within about 4 seconds after the start of heating. Temperature Tf of object 11 exceeds 0 °C at the time about 40 seconds passed after the start of heating. Accordingly, to use output signal Sd of detector 22 as a sign that object 11 has thawed, it is required to decipher a sign indicating that thawing of object 11 has progressed to a certain extent about 40 seconds after the start of heating.

On the other hand, on the graph showing the temporal change in output signal Sd of detector 22, a sign that object 11 has thawed appears in a case where the output signal Sd becomes a local minimum value or in a case where the gradient of the graph becomes close to 0 (zero). However, a local minimum value sometimes appears on the graph showing the temporal change in output signal Sd also in the middle of thawing. For example, FIG. 3 shows that output signal Sd becomes a local minimum value at about 20 seconds after the start of heating.

As a result of an experiment conducted by setting the temperature before thawing of object 11 to minus 20 °C, it is known that a local minimum value of output signal Sd of detector 22 indicating a true sign that object 11 has thawed appears during a period from 30 seconds to 40 seconds after the start of heating.

Accordingly, in a case where a user has selected a course of thawing 100 g of ground meat, controller 24 does not regard a local minimum value that appears within 30 seconds after the start of heating as a sign that object 11 has thawed, and, on the other hand, regards a local minimum value that appears later than 30 seconds after the start of heating as a sign that object 11 has thawed. In this determination manner, it is possible to accurately detect that object 11 has completely thawed. When it has been detected that object 11 had completely thawed, controller 24 causes radio wave generator 20 to stop.

The time necessary to complete thawing increases as the weight of object 11 increases. In a case of thawing 500 g of ground meat, for example, a local minimum value of output signal Sd indicating the sign that object 11 has thawed appears about 60 seconds after the start of heating.

Accordingly, controller 24 does not regard a local minimum value that appears within 45 seconds after the start of heating as a sign that object 11 has thawed, and, on the other hand, regards a local minimum value that appears later than 45 seconds after the start of heating as a sign that object 11 has thawed. In this determination manner, it is possible to accurately detect that object 11 has completely thawed in consideration of the weight and the kind of object 11.

The time necessary to complete thawing differs depending on the kind of object 11. For example, vegetables are larger in water content than the ground meat. Therefore, it takes a longer time to thaw a vegetable than to thaw the ground meat, supposing that their weights are the same. In a case of thawing a 100 g of vegetable, for example, a local minimum value of output signal Sd indicating the sign that object 11 has thawed appears about 60 seconds after the start of heating.

Accordingly, controller 24 does not regard a local minimum value that appears within 45 seconds after the start of heating as a sign that object 11 has thawed, and, on the other hand, regards a local minimum value that appears later than 45 seconds after the start of heating as a sign that object 11 has thawed. In this determination manner, it is possible to accurately detect that object 11 has completely thawed in consideration of the kind of object 11.

In the present exemplary embodiment, controller 24 changes the length of time after the start of heating object 11 until a time to begin determining that object 11 has completely thawed according to the weight and the kind of object 11. With this feature, high frequency heating apparatus 1a can accurately detect that object 11 has completely thawed according to the weight and the kind of object 11.

### SECOND EXEMPLARY EMBODIMENT

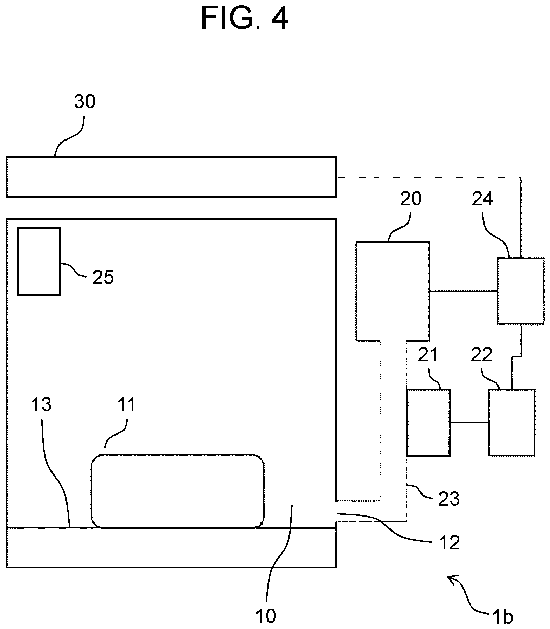

Hereinafter, high frequency heating apparatus 1b according to a second exemplary embodiment of the present disclosure will be described. FIG. 4 is a schematic diagram of high frequency heating apparatus 1b. In the present exemplary embodiment, the same components as or the corresponding components to the components of the first exemplary embodiment are indicated by the same reference signs, and duplicate description on them will be omitted.

As shown in FIG. 4, high frequency heating apparatus 1b further comprises, in addition to the configuration of high frequency heating apparatus 1a, infrared sensor 25 disposed at the upper part of heating chamber 10.

Infrared sensor 25 outputs a signal corresponding to temperature information inside heating chamber 10. Controller 24 receives an output signal of infrared sensor 25 in addition to the output signal of detector 22.

Infrared sensor 25 includes eight (8) infrared detecting elements arranged in a row or sixty-four (64) infrared detecting elements arranged in an 8 × 8 matrix.

In a case where infrared sensor 25 includes eight infrared detecting elements arranged in a row, the temperature information on the entire upper surface of object 11 can be detected in a matrix pattern by activating infrared sensor 25 while gradually changing the orientation of infrared sensor 25.

In a case where infrared sensor 25 includes sixty-four infrared detecting elements arranged in an 8 × 8 matrix, it is possible to detect the temperature information on the entire upper surface of object 11 in a matrix pattern at a time.

In many cases, the temperature of object 11 as an object to be thawed is 0 °C or lower. Also, high frequency heating apparatus 1b is, in many cases, placed in a room kept in a temperature range of 10 °C to 30 °C. Therefore, controller 24 can determine how many of the sixty-four pieces of temperature information correspond to the temperature information of object 11. By this determination, controller 24 can estimate an approximate size of object 11.

In a present exemplary embodiment, controller 24 preliminarily stores a table in which sizes of object 11 and weights of object 11 are associated with each other. With this table, controller 24 can estimate the weight of object 11 without requiring the user to enter the weight of object 11 by using input unit 30.

In the present exemplary embodiment, controller 24 changes the length of time after the start of heating object 11 until a time to begin determining that object 11 has completely thawed according to the estimated weight of object 11 and the kind of object 11 selected by input unit 30. With this feature, high frequency heating apparatus 1b can accurately detect that object 11 has completely thawed according to the weight and the kind of object 11.

### THIRD EXEMPLARY EMBODIMENT

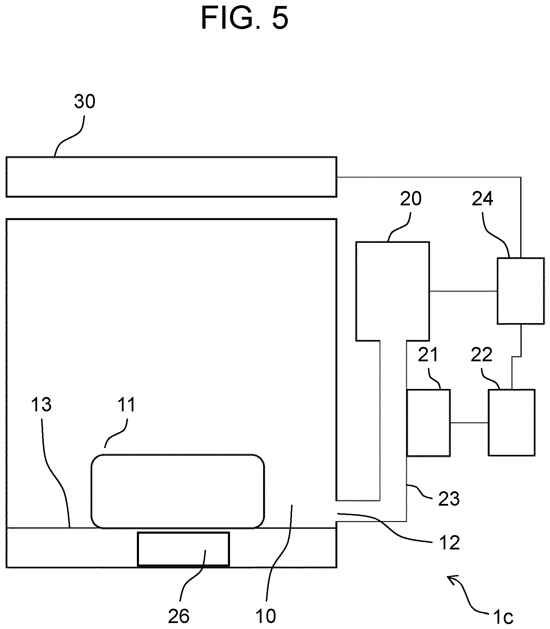

Hereinafter, high frequency heating apparatus 1c according to a third exemplary embodiment of the present disclosure will be described. FIG. 5 is a schematic diagram of high frequency heating apparatus 1c. In the present exemplary embodiment, the same components as or the corresponding components to the components of the first exemplary embodiment are indicated by the same reference signs, and duplicate description on them will be omitted.

As shown in FIG. 5, high frequency heating apparatus 1c further comprises, in addition to the configuration of high frequency heating apparatus 1a, weight sensor 26 disposed under base plate 13.

Weight sensor 26 measures the weight of object 11. Controller 24 receives an output signal of weight sensor 26 in addition to the output signal of detector 22. With this feature, controller 24 can recognize the weight of object 11 without requiring the user to enter the weight of object 11 by using input unit 30.

In the present exemplary embodiment, controller 24 changes the length of time after the start of heating object 11 until a time to begin determining that object 11 has completely thawed according to the measured weight of object 11 and the kind of object 11 selected by input unit 30. With this feature, high frequency heating apparatus 1c can accurately detect that object 11 has completely thawed according to the weight and the kind of object 11.

### INDUSTRIAL APPLICABILITY

The present disclosure is applicable to equipment that heats a heating target object by a high frequency radio wave such as microwave ovens and high frequency thawing devices.

### REFERENCE MARKS IN THE DRAWINGS

- 1a, 1b ,1c: high frequency heating apparatus
- 10: heating chamber
- 11: heating target object
- 12: entrance port
- 13: base plate
- 20: radio wave generator
- 21: antenna
- 22: detector
- 23: waveguide
- 24: controller
- 25: infrared sensor
- 26: weight sensor
- 30: input unit
- 40: input terminal
- 41, 42: resistor
- 43: diode
- 44: capacitor
- 45: output terminal

## Claims

1. A high frequency heating apparatus (1a; 1b; 1c) comprising:
a heating chamber (10) configured to accommodate a heating target object (11);
a radio wave generator (20) configured to generate a high frequency radio wave to be supplied to the heating chamber (10);
an antenna (21) configured to receive at least one of the high frequency radio wave to be supplied to the heating chamber (10) and a high frequency radio wave returned from the heating chamber (10);
a detector (22) configured to detect the high frequency radio wave received by the antenna (21); and
a controller (24) configured to control the radio wave generator (20) based on an output signal (Sd) of the detector (22),
**characterized in that**
the controller (24) is configured to determine that the object (11) has completely thawed based on the output signal (Sd) of the detector (22) and to change a length of time to be taken after a start of heating the object (11) before beginning to determine that the object (11) has completely thawed according to at least one of a weight of the object (11) and a kind of the object (11).

2. The high frequency heating apparatus (1a; 1b; 1c) according to claim 1, further comprising an input unit (30) configured to receive at least one the weight of the object (11) and the kind of the object (11).

3. The high frequency heating apparatus (1b) according to claim 1, further comprising:
an input unit (30) configured to receive the kind of the object (11); and
an infrared sensor (25) that is disposed inside the heating chamber (10) and configured to detect a temperature of the object (11) placed in the heating chamber (10),
wherein the controller (24) is configured to estimate the weight of the object (11) by estimating a size of the object (11) based on the temperature of the object (11) and to change the length of time according to at least one of the weight of the object (11) and the kind of the object (11).

4. The high frequency heating apparatus (1c) according to claim 1, further comprising:
an input unit (30) configured to receive the kind of the object (11); and
a weight sensor (26) configured to detect the weight of the object (11),
wherein the controller (24) is configured to change the length of time according to at least one of the weight of the object (11) and the kind of the object (11).

## Patentansprüche

1. Hochfrequenzheizvorrichtung (1a; 1b; 1c), die umfasst:
eine Heizkammer (10), die so konfiguriert ist, dass sie ein Heizzielobjekt (11) aufnimmt;
einen Funkwellengenerator (20), der so konfiguriert ist, dass er eine Hochfrequenz-Funkwelle erzeugt, die der Heizkammer (10) zuzuführen ist;
eine Antenne (21), die so konfiguriert ist, dass sie die der Heizkammer (10) zuzuführende Hochfrequenz-Funkwelle und/oder die von der Heizkammer (10) zurückgesendete Hochfrequenz-Funkwelle empfängt;
einen Detektor (22), der so konfiguriert ist, dass er die von der Antenne (21) empfangene Hochfrequenz-Funkwelle erfasst; und
eine Steuerung (24), die dazu konfiguriert ist, den Funkwellengenerator (20) basierend auf einem Ausgangssignal (Sd) des Detektors (22) zu steuern, **dadurch gekennzeichnet, dass**
die Steuerung (24) dazu konfiguriert ist, basierend auf dem Ausgangssignal (Sd) des Detektors (22) zu bestimmen, dass das Objekt (11) vollständig aufgetaut ist, und eine Zeitspanne, die nach einem Beginn des Erhitzens des Objekts (11) und dem vor Beginn des Bestimmens, dass das Objekt (11) vollständig aufgetaut ist, genommen wird, gemäß einem Gewicht des Objekts (11) und/oder einer Art des Objekts (11) zu ändern.

2. Hochfrequenzheizvorrichtung (1a; 1b; 1c) nach Anspruch 1, die ferner eine Eingabeeinheit (30) umfasst, die so konfiguriert ist, dass sie zumindest entweder das Gewicht des Objekts (11) oder die Art des Objekts (11) empfängt.

3. Hochfrequenzheizvorrichtung (1b) nach Anspruch 1, die ferner umfasst:
eine Eingabeeinheit (30), die konfiguriert ist, um die Art des Objekts (11) zu empfangen; und
einen Infrarotsensor (25), der innerhalb der Heizkammer (10) angeordnet und dazu konfiguriert ist, eine Temperatur des in der Heizkammer (10) platzierten Objekts (11) zu erfassen,
wobei die Steuerung (24) dazu konfiguriert ist, das Gewicht des Objekts (11) durch Schätzen einer Größe des Objekts (11) basierend auf der Temperatur des Objekts (11) zu schätzen und die Zeitdauer gemäß dem Gewicht des Objekts (11) und der Art des Objekts (11) zu ändern.

4. Hochfrequenzheizvorrichtung (1c) nach Anspruch 1, die ferner umfasst:
eine Eingabeeinheit (30), die konfiguriert ist, um die Art des Objekts (11) zu empfangen; und
einen Gewichtssensor (26), der dazu konfiguriert ist, das Gewicht des Objekts (11) zu erfassen,
wobei die Steuerung (24) so konfiguriert ist, dass sie die Zeitdauer gemäß dem Gewicht des Objekts (11) und/oder der Art des Objekts (11) ändert.

## Revendications

1. Appareil de chauffage à haute fréquence (la ; 1b ; 1c) comprenant :
une chambre de chauffage (10) configurée pour recevoir un objet cible chauffant (11) ;
un générateur d'ondes radio (20) configuré pour générer une onde radio haute fréquence à fournir à la chambre de chauffage (10) ;
une antenne (21) configurée pour recevoir au moins l'une parmi l'onde radio haute fréquence à fournir à la chambre de chauffage (10) et une onde radio haute fréquence renvoyée par la chambre de chauffage (10) ;
un détecteur (22) configuré pour détecter l'onde radio haute fréquence reçue par l'antenne (21) ; et
un contrôleur (24) configuré pour contrôler le générateur d'ondes radio (20) sur la base d'un signal de sortie (Sd) du détecteur (22),
**caractérisé en ce que**
le contrôleur (24) est configuré pour déterminer que l'objet (11) a été complètement décongelé sur la base du signal de sortie (Sd) du détecteur (22) et pour modifier une durée à prendre après un début de chauffage de l'objet (11) avant de commencer à déterminer que l'objet (11) a été complètement décongelé selon à au moins l'un parmi un poids de l'objet (11) et un type de l'objet (11).

2. Appareil de chauffage à haute fréquence (1a ; 1b ; 1c) selon la revendication 1, comprenant en outre une unité d'entrée (30) configurée pour recevoir au moins l'un parmi le poids de l'objet (11) et le type de l'objet (11).

3. Appareil de chauffage à haute fréquence (1b) selon la revendication 1, comprenant en outre :
une unité d'entrée (30) configurée pour recevoir le type de l'objet (11) ; et
un capteur infrarouge (25) qui est disposé à l'intérieur de la chambre de chauffage (10) et configuré pour détecter une température de l'objet (11) placé dans la chambre de chauffage (10),
dans lequel le contrôleur (24) est configuré pour estimer le poids de l'objet (11) en estimant une taille de l'objet (11) sur la base de la température de l'objet (11) et en modifiant la durée en fonction d'au moins l'un parmi le poids de l'objet (11) et le type de l'objet (11).

4. Appareil de chauffage à haute fréquence (1c) selon la revendication 1, comprenant en outre :
une unité d'entrée (30) configurée pour recevoir le type de l'objet (11) ; et
un capteur de poids (26) configuré pour détecter le poids de l'objet (11),
dans lequel le contrôleur (24) est configuré pour modifier la durée en fonction d'au moins l'un parmi le poids de l'objet (11) et le type de l'objet (11).
